# EUROPEAN PATENT APPLICATION

(11) **EP 4 716 066 A1**
(43) Date of publication of application: **25.03.2026**
(21) Application number: 24200949.6
(22) Date of filing: 18.09.2024
(51) Int. Cl.: H02K 1/14, H02K 33/02, H02K 33/16

(54) **STATOR FOR AN ELECTRIC MOTOR, ASSEMBLY METHOD AND HOUSEHOLD APPLIANCE**

(71) Applicant: BSH Hausgeräte GmbH, 81739 München (DE)
(72) Inventor: Vapnár, Jozef, 07101 Michalovce (SK); Blaz, Robert, 06601 Humenne (SK); Ivanak, Martin, 04012 Kosice (SK); Stovcik, Slavomir, 07101 Michalovce (SK)

(57) **Abstract**

Disclosed is a stator for an electric motor, in particular for an electric motor of a linear compressor of a household appliance such as a refrigerator, wherein a coil insulation body comprises elements, which are adapted to hold stator segments flexible (movable, loosely) in place on the insulation body, an assembly method and a household appliance.

## Description

The present invention relates to a stator for an electric motor, in particular for a household appliance, an assembly method of a stator and a household appliance.

Several electric motors with stators are known from the prior art. EP2453556B1 discloses an electric motor having a stator, a rotor and a can arranged between the stator and the rotor, the electric motor being designed as a 2-phase or 3-phase motor, the stator having a plurality of stator pole pairs which are each formed by two adjacent stator poles, which are designed such that they generate oppositely polarized magnetic fields, the stator poles are designed as pole bars with coils arranged thereon, the coils of two adjacent stator poles forming a stator pole pair being electrically connected in series, and the rotor has a plurality of magnetic rotor poles distributed over the circumference and is designed in such a way that a magnetic flux is possible between two adjacent rotor poles, characterized in that the coils of the stator poles of two diametrically opposite stator pole pairs are electrically connected in series, so that two diametrically opposite stator pole pairs are energized simultaneously and in that the coils are interconnected by a printed circuit board arranged on the stator.

One disadvantage of this electric motor is that the stator of the electric motor is constructed in a complex manner and is therefore expensive to manufacture.

The problem of the present invention is therefore to provide a stator for an electric motor which is constructed in a simple manner and permits more effective manufacture, in particular for use in a household appliance.

The object is achieved by an stator with the features of claim 1, by an assembly method with the features of claim 5 and by a household appliance with the features of claim 10. Advantageous embodiments are disclosed in the dependent claims, the description and the figures.

According to the invention, a stator for an electric motor, in particular for a linear compressor a household appliance comprises an insulation body, a coil, and a plurality of U-shaped stator segments. The insulation body defines a longitudinal stator axis and receiving the coil on its outer circumference. The stator segments are arranged in pairs contrarily around the wound coils on the insulation body. At each end side of the insulation body a plurality of elements is provided, which are adapted to hold the stator segments flexible in place on the insulation body.

According to the invention, the coil insulation body has the additional function to hold the stator segments in a loose position. These enables a compact design and due to the movable fixation, the segments can be manipulated at following assembly stations. The coil insulation body can be manufactured via injection molding and the stator segments via stamping, for instance.

In a preferred embodiment, the elements are brackets which push the stator segments radially inwards against ribs of the insulation body, which are in form fit engagement with corresponding recesses of the stator segments. By means of this, an axial movement of the stator segments relatively to the insulation body is prevented, but a pivoting is enabled.

In order to support the stator segments additionally, at its inner circumference, the insulation body can have protrusions supporting the segments inside the insulation body (stator bore). The protrusions form a kind of pockets and support the stator segments in all direction excluding in the insertion direction. They can have a T-like shape such that each protrusion can support two adjacent stator segments.

In order to interact with the protrusion, according to one embodiment, inner legs of the stator segments have a rectangular cross-section such that a resulting shape of an axial stator bore is a polygon. Such rectangular inner legs are easy to manufacture as they do not show any curved surface.

By means of parts which are positioned on the insulation body on opposite end sides, the stator segments can be placed in their final assembly positions. Preferably, the parts have an inner centering ring which pushes the inner legs radially outwardly.

According to the invention, a method for assembling such a stator comprising the steps winding the coil around the insulation body, and arranging the stator segments in pairs contrarily around the wound coils on the insulation body, wherein the stator segments are inserted in insulation body side elements which are adapted to hold the stator segments flexible in place on the insulation body.

The movable placing enables an easy positioned of the stator segments on the insulation body, and a manipulation of the segments at the following assembly stations.

During the arrangement of the stator segments, a form fit engagement between the stator segments and the insulation body can be achieved.

During the arrangement of the stator segments, their inner legs slide along insulation body side holding protrusions extending in radial and axial direction.

By further assembling, the stator segments are pushed radially outwards by a centering ring of a parts which are introduced in the axial stator bore.

A household appliance according to the invention has an electric motor with a stator according to the invention. An exemplary household appliance is a refrigerator.

In the following, preferred embodiments of the present invention are explained with respect to the accompanying drawings. As is to be understood, the various elements and components are depicted as examples only, may be facultative and/or combined in a manner different than that illustrated. Reference signs for related elements are used comprehensively and not defined again for each figure. Shown is schematically in
- Fig. 1:: a perspective view of a stator according to the invention;
- Fig. 2:: an exploded view of the stator;
- Fig. 3:: an axial view of an insulation body of the stator;
- Fig. 4:: a cross-sectional view of the stator;
- Fig. 5:: a detailed view of the sectional view according to Figure 4;
- Fig. 6:: a perspective axial sectional view of the stator;
- Fig. 7:: a detailed view of the sectional view according to Figure 6;
- Fig. 8:: a further detailed view of the sectional view according to Figure 6;

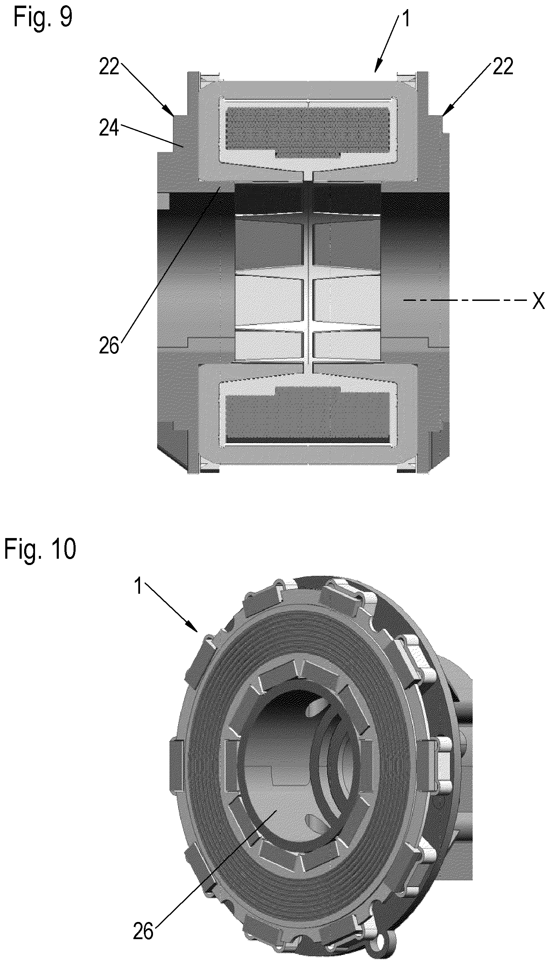

- Fig. 9:: an axial sectional view of the stator with its segments in their final position; and
- Fig. 10:: a perspective cross-sectional view of the stator with its segments in their final position.

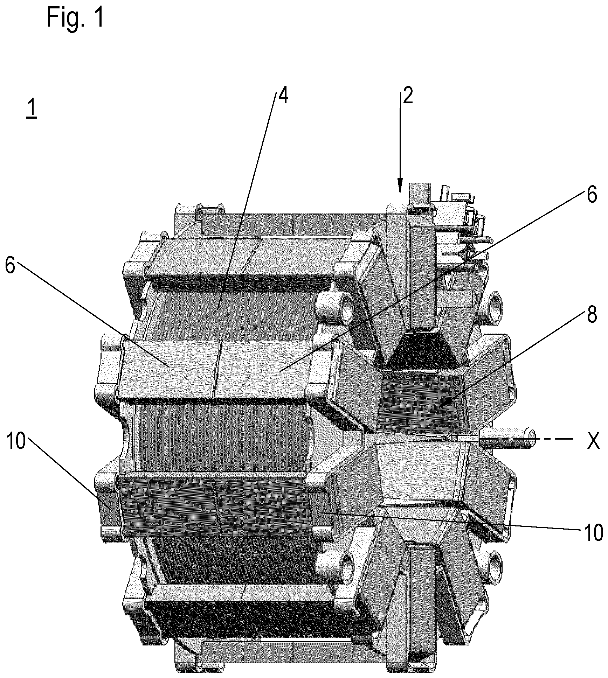

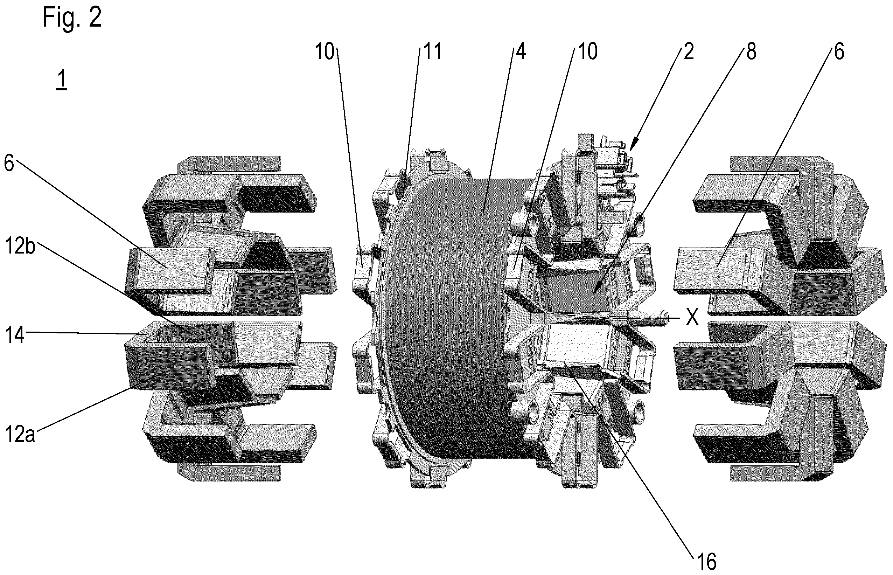

In Figure 1, an assembled stator 1 according to the invention is shown. In Figure 2, the stator 1 is shown in an exploded view. The stator 1 is a part of an electric motor for a linear compressor, installed in a household appliance such as a refrigerator, for instance.

The stator 1 has an insulation body 2, a coil 4 and a plurality of stator segments 6.

The insulation body 2 has a tube-like shape with a central stator bore 8 that extends in longitudinal direction x. Preferably, the insulation body 2 is made via injection moulding. At its end sides, the insulation body 2 has a plurality of elements 10a, 10b forming a kind of elements rings, which are distributed evenly over the circumference of the insulation body 2 in such a way that they are aligned to each other. In this embodiment, the elements are brackets 10 which are provided to receive the brackets 10a, 10b. At their grounds, the brackets 10 have ribs 11 which extend in circumferential direction and which are provided to form a form a movable fit engagement with the brackets 10. Between the bracket rings, the coil 4 is wound on the outer circumference of the insulation body 2.

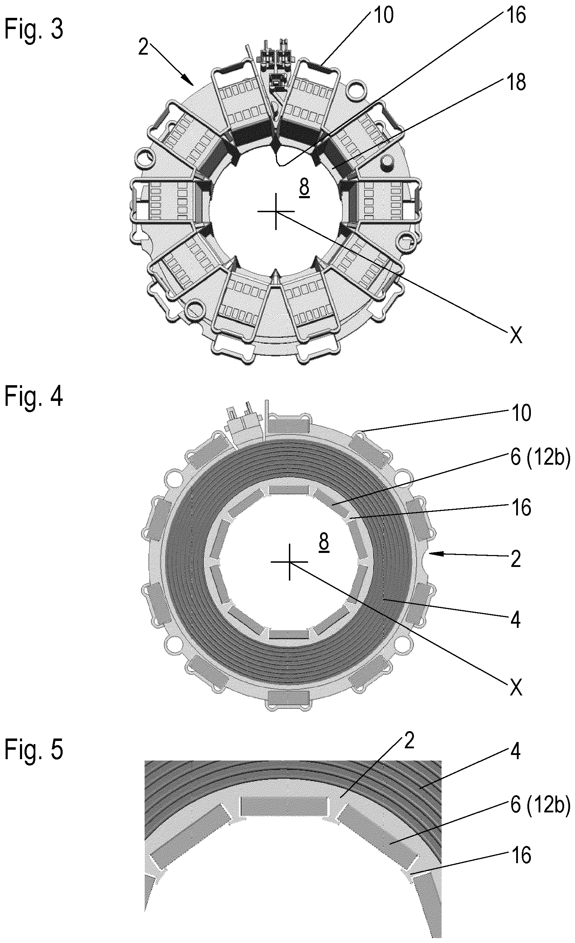

Further on, the insulation body 2 has at its radial inner circumference protrusions 16. As illustrated in Figures 2 and 3, the protrusions 16 extend in opposite axial direction x from an inner ring 18 and have a T-like shape (wing-like). The protrusions form a kind of pockets and are provided to support the stator segments 6 inside the stator bore 8 (Figures 4, 5 and 6).

As shown in Figure 2, the stator segments 6 have U-like shape with two legs 12a, 12b extending in the same direction and with one connecting area 14 extending between these legs 12a, 12b. Preferably, the stator segments 6 are made via stamping. Their legs 12a, 12b have a rectangular cross-section with a constant wide. However, whereas the thickness of the outer legs 12a is constant, the thickness of the inner legs 12b is reduced to their free ends. The straight shape of the inner legs 12b enables the positioning of the protrusions 16 in order to support them in their edge regions, as the stator bore 8 is initially round. If the stator segments 6 are assembled, the stator bore 6 has a polygon shape.

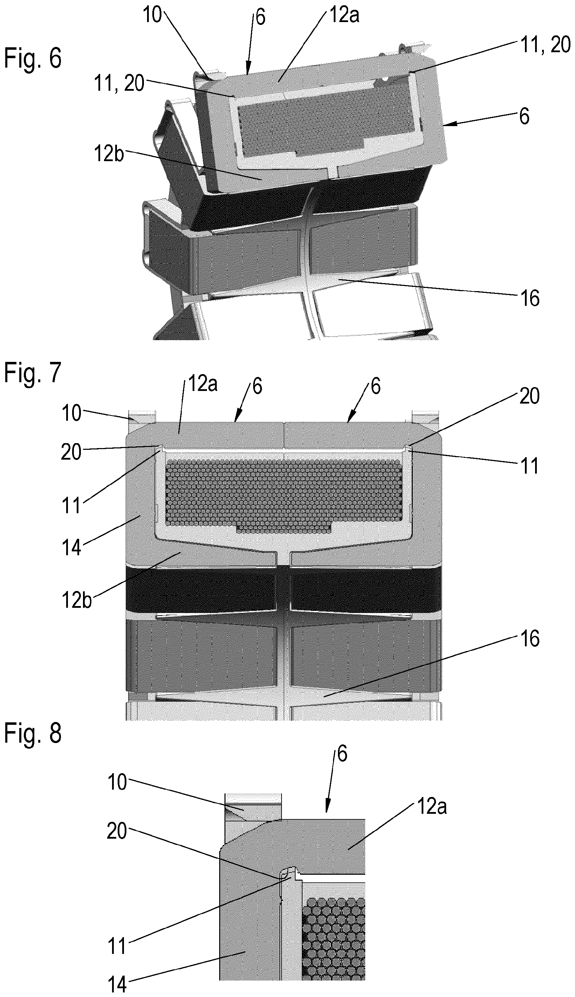

With their outer legs 12a, the segments are introduced in the brackets 10. In order to realise the above mentioned movable form-fit engagement, at least in a corner section between the outer legs 12a and the connection area 14, grooves 15 are provided which corresponds to the insulation body side ribs 11 (see also Figures 6, 7 and 8). With their inner leges 12b, the segments are positioned inside the stator bore 8.

Due to the brackets 10, the radial outer ribs-and groove engagement 11, 13 and the radial inner protrusions 16, the stator segments 6 are hold flexible in place on the insulation body 2. In order to create this flexibility, the brackets 10 and the protrusions 16 are provided with clearance.

According to a preferred method to assemble the stator 1, the coil 4 is wound around the insulation body 2 first. Then, the stator segments 6 are arranged in pairs contrarily around the wound coil 4 on the insulation body 1. The stator segments 6 are inserted with their outer legs 12a in the brackets until the ribs 11 gets in engagement with the groove inside the stator segments 6. Thereby, they slide with edge regions of their inner legs 12b along the protrusion 16. Now, the stator segments 6 are movable fixed on the insulation body 1.

The final (fixed) positioned of the stator segments 6 on the insulation body 2 is reached by multiple parts 22 of the electric motor (the linear compressor) which are positioned on the opposite end sides of the insulation body 2. The parts 22 form a kind of stator shell. Each part 22 have a radial outer flange 24 covering the connection areas 14 of the stator segments 6 and a radial inner centring ring 26. The centring rings 26 push the inner legs 12b of the stator segments 6 radial outwards such that the stator segments 6 are hold in their final axial and radial positions.

Disclosed is a stator for an electric motor, in particular for an electric motor of a linear compressor of a household appliance such as a refrigerator, wherein a coil insulation body comprises elements, which are adapted to hold stator segments flexible (movable, loosely) in place on the insulation body, an assembly method and a household appliance.

### Reference signs

- 1: stator
- 2: insulation body
- 4: coil
- 6: segment
- 8: stator bore
- 10: elements, here bracket
- 11: rib
- 12a, b: leg
- 14: connecting area
- 16: protrusion
- 18: ring
- 20: groove
- 22: part
- 24: flange
- 26: centring ring

- x: longitudinal direction

## Claims

1. A stator (1) for an electric motor, comprising
• an insulation body (2);
• a coil (4); and
• a plurality of U-shaped stator segments (6);
wherein
• the insulation body (2) defines a longitudinal stator axis (x) and receiving the coil (4) on its outer circumference; and
• the stator segments (6) are arranged in pairs contrarily around the wound coils (4) on the insulation body (2);
wherein
• on the insulation body (2) elements (10, 16) are provided, which are adapted to hold the stator segments (6) flexible in place on the insulation body (2).

2. The stator according to claim 1, wherein brackets (10) pushing the stator segments (6) radially inwards against ribs (11) of the insulation body (2), which are in form fit engagement with corresponding grooves (20) of the stator segments (6).

3. The stator according to claims 1 or 2, wherein at its inner circumference, the insulation body (2) has protrusions (16) extending in radial and axial directions and are adapted to support the segments (6) inside the insulation body (2).

4. The stator according to claims 1, 2 or 3, wherein inner legs (12b) of the stator segments (6) have a rectangular cross-section.

5. The stator according to any of the preceding claims, wherein the stator segments (6) are placed in their final assembly positions by parts (22) which are positioned on opposite sides on the insulation body (2).

6. A method for assembling a stator (1) according to any of the preceding claims, comprising the steps:
• Winding the coil (4) around the insulation body (2);
• Arranging the stator segments (6) in pairs contrarily around the wound coil (4) on the insulation body (2), wherein the stator segments (6) are interacting with insulation body side elements (10, 16) which are adapted to hold the stator segments flexible in place on the insulation body (2).

7. A method according to claim 6, wherein during the arrangement of the stator segments (6), a form fit engagement between the stator segments (6) and the insulation body (2) is achieved.

8. A method according to claims 6 or 7, wherein during the arrangement of the stator segments (6), their inner legs (12b) slide along insulation body side protrusions (16).

9. A method according to claims 6, 7 or 8, wherein parts (22) are arranged in axial direction (x) on opposite sides of the insulation body (2) holding the stator segments (6) in its final assembly position.

10. A household appliance comprising an electric motor with a stator (1) according to one of claims 1 to 5.
